# EUROPÄISCHE PATENTSCHRIFT

(11) **EP 1 634 433 B1**
(45) Veröffentlichungstag und Bekanntmachung des Hinweises auf die Patenterteilung: **31.07.2013**
(21) Anmeldenummer: 04766048.5
(22) Anmeldetag: 16.06.2004
(51) Int. Cl.: H04M 3/533, H04M 7/00

(54) **SPARSAMERER RESSOURCENEINSATZ BEI DER NUTZERINTERAKTION MIT EINEM SPRACHDIALOGSYSTEM IN EINEM PAKETNETZ DURCH EINE AUFWANDSREDUZIERTE BEARBEITUNG VON SIGNALISIERUNGSINFORMATIONEN**
MORE ECONOMICAL RESOURCE APPLICATION ON THE USER INTERACTION WITH A SPEECH DIALOGUE SYSTEM IN A PACKET NETWORK BY MEANS OF A SIMPLIFYING PROCESSING OF SIGNALLING INFORMATION
UTILISATION DE RESSOURCES PLUS ECONOME LORS DE L'INTERACTION D'UTILISATEURS AVEC UN SYSTEME DE DIALOGUE VOCAL DANS UN RESEAU A COMMUTATION PAR PAQUETS GRACE A UN TRAITEMENT A COMPLEXITE REDUITE D'INFORMATIONS DE SIGNALISATION

(30) Priorität: 17.06.2003 DE 10327290
(43) Veröffentlichungstag der Anmeldung: 15.03.2006
(73) Patentinhaber: Nokia Siemens Networks GmbH & Co. KG, 81541 München (DE)
(72) Erfinder: FRANZ, Mathias, 10178 Berlin (DE); FREUND, Detlev, 10707 Berlin (DE); LÖBIG, Norbert, 64291 Darmstadt (DE); SCHÖPF, Johannes, 82256 Fürstenfeldbruck (DE)
(86) Internationale Anmeldenummer: PCT/EP2004/051128
(87) Internationale Veröffentlichungsnummer: WO 2004/112367

(56) Entgegenhaltungen:
- EP-A- 1 304 845
- EP-A- 1 345 399
- WO-A-03/013116
- H. SCHULZRINNE; S. PETRACK;: "RTP Payload for DTMF Digits, Telephony Tones and Telephony Signals" RFC 2833, Mai 2000 (2000-05), Seiten 1-30, XP015008616 in der Anmeldung erwähnt
- BHARATIA V ET AL: "Internet Draft; draft-culpepper-sip-info-event-00.txt; SIP INFO Method for Event Reporting" INTERNET ENGINEERING TASK FORCE, XX, XX, 18. April 2000 (2000-04-18), Seiten 1-10, XP002206928

## Beschreibung

Die Erfindung betrifft Verfahren und Vorrichtungen für eine aufwandsreduzierte Bearbeitung von Signalisierungsinformationen im Rahmen eines Dialogs mit einem Sprachdialogsystem in einem Paketnetz.

Eine der wichtigsten aktuellen Entwicklungen, die die Gebiete der Netztechnologien, der Vermittlungstechnik und der Internet-Technologien berührt, ist die Realisierung von Diensten mit Echtzeit-Übertragung über Paketnetze.

Derzeit wird der Großteil der Sprachübertragung über leitungsvermittelte Netze - auch TDM (time division multiplexing) Netze genannte - abgewickelt. Für die Zukunft wird angestrebt, Sprache in größerem Umfang über paketorientierte, momentan hauptsächlich für Datenübertragung verwendete Netze zu übertragen. Die wichtigste Klasse von Paketnetzen sind dabei die sogenannten IP (Internet protocol) Netze. Zusätzlich werden in Zukunft weitere, übertragungskapazitätsintensive Echtzeit-Dienste hinzukommen, wie z.B. die Übertragung von Videodaten im Rahmen eines Video-on-Demand Dienstes.

Ein wichtige Klasse von Echtzeit-Diensten ist die automatisierte Bereitstellung von Sprach- oder Videoinformationen. Ein Beispiel für einen derartigen Dienst sind die aus TDM Netzen bekannten Ansagendienste, z.B. Rufnummernansagen ("die Rufnummer des Teilnehmers ist ...") oder Fehlermeldungen ("kein Anschluss unter dieser Nummer"). Dabei können automatisierte Informationsausgaben auch teilnehmerspezifische Informationen (z.B. Rufnummern) enthalten. Eine Erweiterung von der Ansagen-Funktionalität ist die Dialog-Funktionalität. Dabei kann der Nutzer mittels Tasten-Eingaben in seinem Endge rät oder mittels Spracheingaben den Dienst bzw. den Dialog steuern. In Paketnetzen werden derartige Dienste mittels Servern realisiert. Im Falle von interaktiven Diensten ist der Begriff IVR (interactive voice response) Server gebräuchlich. Für die Übertragung von Sprache wurden eine Reihe von Kodierverfahren bzw. Codecs (Coder-Decoder) standardisiert, wie z.B. G.711A/u, G.723.1, G.726, G.728 und G.729A/B. Für die Übertragung von Videoinformationen kommen z.B. die Standards H.261 und H.263 zum Einsatz. Für eine Informationsausgabe wird üblicherweise in einer sogenannten Codec Negotiation ein Codec bzw. Kodierverfahren für die Informationsübertragung ausgewählt, der bzw. das von beiden Endpunkten des Netzes unterstützt wird.

In dem Internet Standardisierungsdokument H. Schulzerinne, S. Petrack: RTP Payload for DTMF Digits, Telephony Tones und Telephony Signals", RFC 2833, Mai 2000, S. 1-30, wird beschrieben, wie dual-tone multifrequency (DTMF) Signalisierung, Ton-Signalisierung und Telephonie-Anreize übertragen werden. Es werden zwei Nutzdatenformate definiert, ein erstes zur Übertragung von DTMF Ziffern und anderen Anschlussleitungs- und Verbindungsleitungssignalen, ein zweites zur Übertragung genereller Mehrfrequenztöne in RTP Paketen.

In dem Internet Standardisierungsdokument H. Bharatia, E. Cave, B. Culpepper: SIP INFO method for Event Reporting, Internet Draft, 18. April 2000, Seiten 1-10, XP-002206928, wird die Verwendung des SIP INFO Verfahrens für die Kommunizierung von mid-call events beschrieben. Insbesondere kann das Verfahren zur DTMF Signalisierung zwischen einem Media Gateway Controller (MGC) und einer SIP Applikation eingesetzt werden.

In der Europäischen Patentanmeldung EP-A-1 345 399 ist ein Verfahren beschrieben zur Steuerung von im intelligenten Netzwerk üblichen Diensten im paketvermittelten Netzwerk mittels DTMF-Tönen. Es wird hierzu vorgeschlagen, während einer Verbindung von einem ersten Leitungsnetz über ein Paketnetz zu einem zweiten Leitungsnetz vom ersten Leitungsnetz eintreffende Signaltöne mit Hilfe eines Media Gateways aus dem Informationsfluss abzuzweigen und über ein Signalisierungsnetz an einen Anwendungsserver für intelligente Netzdienste weiterzuleiten. Auf diese Weise kann ein in einem Paketnetz implementierter Anwendungsserver von einem Leitungsnetz aus gesteuert werden.

Für Dienste mit Echtzeit-Übertragung über Datennetze ist es essentiell, die aus dem TDM Netz bekannten Dienstmerkmale für entsprechende oder neue Dienste mit vergleichbarer Qualität und Effizienz bereitzustellen. Der Optimierung des Ressourceneinsatzes kommt dabei eine wichtige Rolle zu.

Die Erfindung hat zur Aufgabe, die Effizienz des Ressourceneinsatzes bei der automatisierten Informationsausgabe zu verbessern.

Die Erfindung basiert auf folgender Überlegung. Die Signalisierung im Rahmen eines interaktive Dialogs mit einem Sprachdialogsystem bzw. einem IVR (Interactive Voice Response) Server, z.B. für eine Ausgabe von Informationen, erfolgt üblicherweise mittels DMFT-Zeichen (DTMF: Dual Tone Multiple Frequency). Bei dieser Signalisierung - auch häufig auch als Tonwahl oder Mehrfrequenz-Wahlverfahren bezeichnet - wird eine Interaktion zwischen dem Teilnehmer und dem Sprachdialogsystem mittels Austausch von durch Frequenzen codierten Informationen realisiert. Bei der Übertragung von DTMF-Zeichen über ein Paketnetz kann man drei Fälle unterscheiden:
- Die DTMF-Zeichen sind im Nutzdatenstrom enthalten. Man spricht in diesem Zusammenhang auch von Inband-Übertragung. Inband-Übertragung wird nur in Verbindung mit nichtkomprimierenden Kodierverfahren bzw. Codecs wie z.B. G.711 angewandt.
- DTMF-Zeichen und Nutzdaten werden getrennt übertragen, d.h. Außenband-Übertragung von DTMF Signalisierungsinformationen wird vorgenommen.
- Die DTMF-Zeichen werden im Nutzdatenstrom in gesondert gekennzeichneten Datenpaketen übertragen. Eine derartige Übertragung wurde von der IETF in dem Request for Comments RFC 2833 für das RTP (real time protocol) Paketformat standardisiert.

Bei Inband-Übertragung von DTMF Zeichen sind üblicherweise in dem Sprachdialogsystem bzw. IVR Server spezielle z.B. mit DSPs (DSP: digital signalling processor) oder ASICs (ASIC: Application specific integrated circuit) gebildete Hardware-ressourcen für die Auswertung der DTMF Zeichen erforderlich. Im Rahmen der Erfindung wird Inband-Übertragung von DTMF Zeichen weitgehend vermieden und die Verwendung von Sprachdialogsystemen bzw. IVR Server ohne Hardware-Ressourcen für die Erkennung von DTMF Signalisierung vorgeschlagen.

Die Festlegung des Kodierverfahrens und die Art des Austausches von DTMF Zeichen für eine automatisierte Informationsausgabe wird üblicherweise im Zuge einer sogenannten Codec Negotiation zwischen Paketnetz-Endpunkten vorgenommen. Der erste Paketnetz-Endpunkt ist dabei beispielsweise durch eine Netzübergangseinrichtung bzw. einen Media Gateway oder durch ein direkt an das Paketnetz angeschlossenes paketbasiertes Endgerät gegeben. Der zweite Paketnetz-Endpunkt ist das Sprachdialogsystem. Bei der Codec Negotiation wird aus einer Liste von Codecs ein von beiden Endpunkten und dem Netz unterstützter Codec ausgewählt. Üblicherweise wird mit der Aus wahl eines Codecs defaultmäßig bzw. per Voreinstellung auch die Übertragungsart der DTMF Zeichen festgesetzt, z.B. ist die Auswahl des Kodierverfahrens G.711 mit Inband-Übertragung der DTMF Signale verbunden. Im Rahmen der Erfindung werden zwei Verfahren aufgezeigt, um Inband-Übertragung auszuschließen:

Bei dem ersten Verfahren wird nur Außenband-Signalisierung oder Signalisierung mittels besonders gekennzeichneter Datenpakete bei der Codec Negotiation zugelassen. Es werden praktisch aus der Liste verwendbarer Codecs im Rahmen der Codec Negotiation Kodierverfahren eliminiert, die eine Inband-Signalisierung von DTMF Signalen implizieren.

Das zweite Verfahren sieht eine Erweiterung der Logik der das Sprachdialogsystem steuernden Steuervorrichtung vor. Die Steuervorrichtung (z.B. eine paketbasierte Vermittlungsstelle, ein Call Server, ein Proxy Server oder ein Softswitch) wird so ausgestaltet, dass durch sie dem entfernten, bei der Codec Negotiation beteiligten Paketnetz-Endpunkt signalisiert wird, unabhängig von dem ausgewählten Codec Außenband-Signalisierung von DTMF Zeichen zu verwenden. In diesem Fall kann in der Regel auch der Codec G.711 gewählt werden.

Die Erfindung hat den Vorteil, dass Sprachdialogsysteme ohne aufwändige Hardwareressourcen verwendet werden können. Prinzipiell können für Dienste mit Nutzer-Interaktion oder automatisierte Informationsausgabe dann auch sogenannte general purpose platforms, also Multifunktionsrechner, mit offenen Schnittstellen verwendet werden, die durch Ihre Softwareausstattung die gewünschten IVR- bzw. Informationsausgaberessourcen bereitstellen. Das vorsehen einer dedizierten Hardware ist nicht mehr erforderlich.

Bei dem erfindeschen Verfahren wird - sozusagen als Backup - das Rerouting des Auftrags an ein Sprachdialogsystem mit dedizierter Hardware für die Fälle vorgesehen, bei denen mit der obigen Vorgehensweise keine Vermeidung der Innenband-Signalisierung von DTMF Zeichen erreicht wird. Das wäre bei dem ersten Verfahren der Fall, wenn kein von beiden Paketnetz-Endpunkten unterstützter Codec mit Außenband-Signalisierung identifiziert werden kann und Signalisierung mittels eigen für DTMF Zeichen bereitgestellter Pakete ebenfalls nicht vorgesehen ist. In diesem Fall wird gemäß der Weiterbildung der Dienst an ein Sprachdialogsystem mit dedizierter Hardware vermittelt. Bei dem zweiten Verfahren, im Zuge dessen eine Steuervorrichtung dem ersten Paketnetz-Endpunkt unabhängig von ausgewählten Codec Außenband-Signalisierung vorschreibt, kann eine Weitervermittlung zu dem Sprachdialogsystem mit Hardware für DTMF Zeichen-Erkennung erfolgen, wenn die notwendigen Ressourcen bzw. die technische Unterstützung für die Außenband-Übertragung nicht vorhanden sind.

Dieses Verfahren erlaubt eine Dienstbehandlung auch in Fällen, in denen eine Dienstabwicklung mit dem Sprachdialogsystem ohne spezielle Hardwareeinrichtung nicht durchgeführt werden kann. Ansonsten müssten derartige Dienstanforderungen abgewiesen werden. Im Regelfall wird jedoch der Dienst durch das Sprachdialogsystem ohne spezielle Hardware erbracht werden können. Daher wird eine Bereitstellung von einem Backup Sprachdialogsystem für eine Vielzahl von Sprachdialogsysteme ohne spezielle Hardware ausreichen. Alternativ kann das Sprachdialogsystem mit spezieller Hardware nur einem Sprachdialogsystem ohne dedizierter Hardware zugeordnet sein, wobei das Sprachdialogsystem ohne spezieller Hardware entsprechend leistungsstärker dimensioniert ist, d.h. hinsichtlich der zur Verfügung stehenden Ressourcen für die Bearbeitung von sehr viel mehr Dienstanforderungen pro Zeiteinheit als das andere Sprachdialogsystem ausgelegt ist.

Im Folgenden wird der Erfindungsgegenstand im Rahmen eines Ausführungsbeispiels anhand einer Figur näher erläutert.

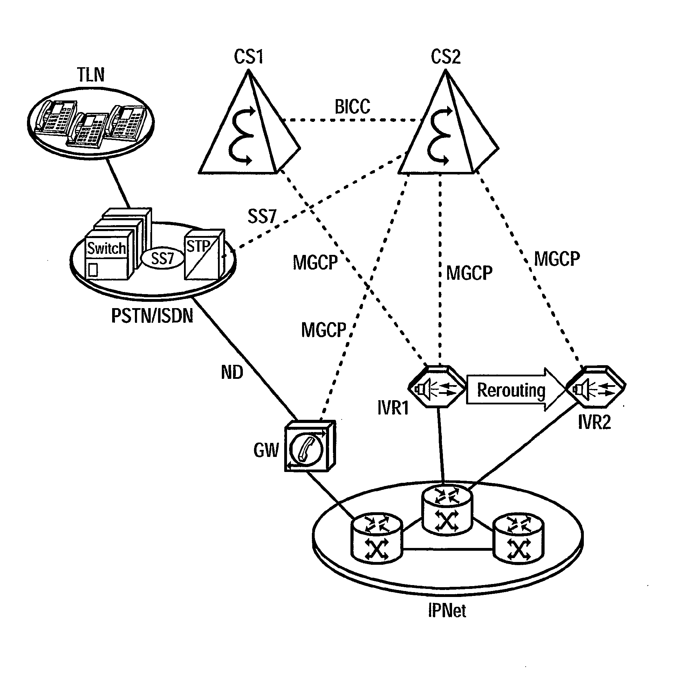

In der Figur sind zwei IVR Server IVR1 und IVR2 dargestellt, wobei der erste IVR Server IVR1 keine spezielle Hardware für die Bearbeitung von DTMF Zeichen aufweist, der zweite IVR Server dagegen schon. Es sind Teilnehmer TLN dargestellt, die mit einem TDM Netz PSTN/ISDN verbunden sind. Über ein Vermittlungssystem Switch können Sprachverbindungen der Teilnehmer TLN vermittelt werden. Das TDM Netz ISDN/PSTN ist mittels eines Mediagateways GW mit einem IP Netz IPNet verbunden. Es handelt sich dabei beispielsweise um ein Kernnetz. Innerhalb des IP Netzes IPNet werden Signalisierungsinformationen und Nutzdaten ND getrennt geführt. Aus dem TDM Netz IDSN/PSTN kommende Signalisierungsinformationen werden über einen sogenannten Signalling Transfer Point STP zu einem Call Server CS2 übertragen. Signalisiert wird dabei mit Hilfe von Signalen des SS7 Signalisierungssystems. Der Call Server CS2 tauscht mittels des MGCP (Media Gateway Control Protocol) Protokolls Signalisierungsinformationen mit dem Gateway GW und den Sprachdialogsystemen IVR1 und IVR2 aus. Anstelle des MGCP Protokolls könnte auch das H.248 Protokoll verwendet werden. Der Call Server CS1 kann ebenfalls das Sprachdialogsystem IVR1 mit Hilfe des MGCP (Media Gateway Control Protocol) Protokolls steuern.

Erfindungsgemäß erfolgt die Auswahl eines Codecs im Rahmen eines interaktiven Dialogs mit einem Teilnehmer TLN wie folgt:

Es wird im Rahmen der Codec Negotiation eine DTMF-Signalisierungsart ohne Innenband-Signalisierung über die Auswahl des Kodierverfahren erzwungen, die im Paketnetz mittels Signalisierung zwischen den IP-Endpunkten und dem Call Server CS2 erfolgt. Diese Prozedur läuft so ab, dass der A-seitige IP-Endpunkt, der durch das Gateway GW gegeben ist, während des Verbindungsaufbaus eine priorisierte Liste von Voice-Codecs, Fax- und Ton-Fähigkeiten (capabilities) an den Call Server CS2 signalisiert. Der Call Server CS2 kann entsprechend administrierbarer Vorgaben die Voice-Codecs/ Capa bilities aus der Liste streichen, die im Netz nicht verwendet werden sollen, bzw. die Priorität ändern. Die modifizierte Liste wird dem B-seitigen IP-Endpunkt, in diesem Fall dem Sprachdialogsystem IVR1, zugestellt. Dieses vergleicht die über die Signalisierung empfangene Liste mit der eigenen Liste und eliminiert die Voice-Codecs/ Capabilities, die nicht in beiden Listen enthalten sind. Die so überprüfte und ggf. modifizierte Liste wird über den Call Server CS2 zurück zum A-seitigen IP-Endpunkt signalisiert, und gibt die zu verwendende Auswahl von Voice-Codecs/ Capabilities an.

Das Sprachdialogsystem IVR1 bietet im Zuge der Codec Negotiation nur die Signalisierung nach RFC2833 und komprimierende Voice-Codecs an, die eine Inband-DTMF-Signalisierung nicht zulassen und daher zwangsläufig eine DTMF-Außenband-Signalisierung bewirken. Das heißt, dass insbesondere die üblicherweise verwendeten, aber DTMF-transparenten Rückfallkodierer (z.B. G.711) in der vom IVR zurücksignalisierten Codec-Liste nicht enthalten sind. Die Anforderung zur DTMF-Außenband-Signalisierung erfolgt durch den Call Server CS2 mittels Signalisierung an den A-seitigen IP-Endpunkt. Dazu besitzt der Call Server CS2 eine Logik, die den durch die Codec Negotiation ausgehandelten Voice-Codec überprüft. Handelt es sich um einen komprimierenden Voice-Codec (z.B. G.723), signalisiert der Call Server die DTMF-Außenband-Übertragung zum A-seitigen IP-Endpunkt.

Im Call Server CS2 befindet sich eine periphere Einrichtung mit virtuellen Ansage-und/oder Dialogports, über die das Sprachdialogsystem IVR1 und gegebenenfalls auch das Sprachdialogsystem IVR2 gesteuert werden. Diese periphere Einrichtung mit virtuellen Ansage-und/oder Dialogports setzt die Belegungen seiner Ports durch den Call Server CS2 um auf Belegungssignalisierung der zugeordneten, zu den Sprachdialogsystemen führenden Ports. Die Aufträge zum Spielen von Ansagen und Dialogen werden ebenfalls von dieser peripheren Einrichtung in Richtung der Sprachdialogsysteme ausgebracht. Rückmeldungen der Sprachdialogsysteme IVR1 oder IVR2, die das Ende der Ansage anzeigen oder den Input des Endnutzers enthalten, erfolgen an die zugeordnete periphere Einrichtung mit virtuellem Ansage- und/oder Dialogport. Sämtliche Signalisierung zwischen der das virtuelle Ansage- /und Dialogport betreuenden peripheren Einrichtung und den zugeordneten externen Sprachdialogsystemen IVR1 bzw. IVR2 erfolgt über das Signalisierungsprotokoll MGCP, das zum Zugriff auf das Media Gateway MG verwendet wird.

Für den Fall, dass der A-seitige IP-Endpunkt keine der vom IVR1 angebotenen Voice-Codecs, die zu DTMF-Außenband-Signalisierung führen, bzw. RFC2833 unterstützen, erfolgt ein automatisches Rerouting bzw. Weiterleiten der Dienstanforderung auf ein alternatives Sprachdialogsystem IVR2, das auch die Voice-Codecs mit Inband-DTMF-Signalisierung unterstützt. Da es in der Regel nur eine geringe Zahl von IP-Endpunkten gibt, die ausschließlich Voice-Codecs mit Inband-DTMF-Signalisierung unterstützen, kann die Kanalzahl von dem Sprachdialogsystem IVR2 wesentlich geringer dimensioniert werden als die von dem Sprachdialogsystem IVR1, wodurch für die insgesamt bereitzustellende IVR-Funktionalität eine Kostenoptimierung erreicht wird.

Als Trigger-Ereignis für das Rerouting von dem Sprachdialogsystem IVR1 auf das Sprachdialogsystem IVR2 wird die Codec Negotiation verwendet, die während des Verbindungsaufbaus stattfindet. Das Sprachdialogsystem IVR1 stellt als Resultat der Codec Negotiation fest, dass es keine Übereinstimmung zwischen den Voice-Codecs des A-seitigen IP-Endpunktes und des Sprachdialogsystems IVR1 gibt, und signalisiert einen entsprechenden Fehler (z.B. Fehler-Code 543 "Codec Negotiation Error") zur peripheren Einrichtung mit virtuellem Ansage- und/oder Dialogport im Call Server. Die periphere Einrichtung wertet diesen Fehler aus und veranlasst daraufhin mittels der Verbindungssteuerung im Call Server einen Abbau der Verbindung zum Sprachdialogsystem IVR1, gefolgt von einem Aufbau der Verbindung zum Sprachdialogsystem IVR2. Die Verbindung zum A-seitigen IP-Endpunkt wird während dieser Rerouting-Prozedur gehalten. Die Adressen der Sprachdialogsysteme IVR1 und IVR2 sind in der Datenbasis des Call Servers CS2 administriert.

Es ist auch denkbar, dass das Sprachdialogsystem mit spezieller Hardware IVR2 durch einen von dem Call Server CS2 unterschiedlichen Call Server gesteuert wird, z.B. durch den Call Server CS1. In diesem Fall kann das Rerouting von dem Sprachdialogsystem IVR1 zu dem Sprachdialogsystem IVR2 durch den Austausch von entsprechenden Signalisierungsinformationen zwischen den beiden Call Servern CS2 und CS1 z.B. mittels des BICC (Bearer Independent Call Control) Protokolls bewirkt werden.

Eine alternatives Vorgehensweise basiert auf der Erweiterung der Logik im Call Server CS2 zum Erzwingen der DTMF-Außenband-Signalisierung. Diese Erweiterung besteht darin, dass die Logik prüft, ob der B-seitige IP-Endpunkt das Sprachdialogsystem IVR1 ist. In diesem Fall bietet das Sprachdialogsystem IVR1 auch die nichtkomprimierenden Voice-Codecs an, und der Call Server CS2 signalisiert unabhängig vom ausgewählten Voice-Codec immer DTMF-Außenband-Übertragung zum A-seitigen IP-Endpunkt.

## Patentansprüche

1. Verfahren zur Festlegung der Art der Übertragung von Signalisierungsinformationen zwischen einem ersten und einem zweiten Paketnetz-Endpunkt für eine aufwandsreduzierte Bearbeitung der Signalisierungsinformationen im Rahmen eines Dialogs mit einem Sprachdialogsystem in einem Paketnetz (IPNet), bei welchem Verfahren
- als einer der Paketnetz-Endpunkte ein Sprachdialogsystem (IVR1) bestimmt wird, welches frei von speziellen Hardwareeinrichtungen zur Unterstützung von In-Band-Signalisierung ist,
- für die Übertragung von Signalisierungsinformationen Voice-Codecs mit In-Band-Signalisierung weitgehend vermieden werden, dadurch daß
- im Fall, dass, im Rahmen einer (oder - Negotiation zwischen den beiden Paketnetz-Endpunkten, für die Übertragung über das Paketnetz (IPNet) ein durch beide Paketnetz-Endpunkte unterstützter Voice-Codec mit Außenband-Signalisierung oder Signalisierung nach RFC 2833 festgelegt werden kann, ein von beiden Paketnetz-Endpunkten unterstützter Voice-Codec mit Außenband-Signalisierung oder Signalisierung nach RFC 2833 für die Übertragung von Signalisierungsinformationen festgelegt wird, und
- im Fall, dass, im Rahmen einer (oder - Negotiation zwischen den beiden Paketnetz-Endpunkten, für die Übertragung über das Paketnetz (IP-Net) kein durch beide Paketnetz-Endpunkte unterstützter Voice-Codec mit Außenband-Signalisierung oder Signalisierung nach RFC 2833 festgelegt werden kann,
-- als der eine der Paketnetz-Endpunkte statt dem Sprachdialogsystem (IVR1) ohne spezielle Hardwareeinrichtung zur Unterstützung von In-Band-Signalisierung ein In-Band-Signalisierung unterstützendes Sprachdialogsystem (IVR2) bestimmt wird,
-- ein automatisches Rerouting bzw. Weiterleiten einer Dienstanforderung auf das In-Band-Signalisierung unterstützende Sprachdialogsystem (IVR2) vorgenommen wird und
-- ein Kodierverfahren mit In-Band-Signalisierung für die Übertragung der Signalisierungsinformationen festgelegt wird.

2. Verfahren zur Festlegung der Art der Übertragung von Signalisierungsinformationen zwischen einem ersten und einem zweiten Paketnetz-Endpunkt für eine aufwandsreduzierte Bearbeitung der Signalisierungsinformationen im Rahmen eines Dialogs mit einem Sprachdialogsystem in einem Paketnetz (IPNet), bei welchem Verfahren
- als zweiter Paketnetz-Endpunkt ein Sprachdialogsystem (IVR1) ohne spezielle Hardwareeinrichtung zur Unterstützung von In-Band-Signalisierung bestimmt wird,
- , im Rahmen einer (oder - Negotiation zwischen den beiden Paketnetz-Endpunkten, ein von beiden Paketnetz-Endpunkten unterstützter Voice-Codec für die Übertragung von Signalisierungsinformationen festgelegt wird, und
- das Sprachdialogsystem (IVR1) von einer Steuervorrichtung (CS2) gesteuert wird, welche unabhängig von dem ausgewählten Voice-Codec eine Signalisierungsnachricht zu dem ersten Paketnetz-Endpunkt sendet, die die Verwendung von Außenband-Signalisierung vorschreibt,
- im Fall, dass der erste Paketnetz-Endpunkt Außenbandsignalisierung für von beiden Paketnetz-Endpunkten unterstützte Voice-Codecs nicht zulässt,
-- als ein Paketnetz-Endpunkt statt dem Sprachdialogsystem (IVR1) ohne spezielle Hardwareeinrichtung zur Unterstützung von In-Band-Signalisierung ein In-Band-Signalisierung unterstützendes Sprachdialogsystem (IVR2) bestimmt wird,
-- ein automatisches Rerouting bzw. Weiterleiten einer Dienstanforderung auf das In-Band-Signalisierung unterstützende Sprachdialogsystem (IVR2) vorgenommen wird und
-- ein Kodierverfahren mit In-Band-Signalisierung für die Übertragung der Signalisierungsinformationen festgelegt wird.

3. Verfahren nach einem der vorhergehenden Ansprüche,
**dadurch gekennzeichnet, dass**
im Rahmen einer Codec Negotiation/Bestimmung eine Auswahl eines Voice-Codecs vorgenommen wird, das von beiden Paketnetz-Endpunkten unterstützt wird.

4. Verfahren nach einem der vorhergehenden Ansprüche,
**dadurch gekennzeichnet, dass**
die Übertragung von Signalisierungsinformationen im Rahmen der automatisierten Informationsausgabe mittels DTMF (Dual Tone Multiple Frequency) Zeichen erfolgt.

5. Verfahren nach einem der vorhergehenden Ansprüche,
**dadurch gekennzeichnet, dass**
das Sprachdialogsystem (IVR1) durch eine Steuervorrichtung (CS2) gesteuert wird, welche durch eine paketbasierte Vermittlungsstelle, einen Call Server, einen Proxy Server oder einen Softswitch gegeben ist.

6. Verfahren nach einem der vorhergehenden Ansprüche,
**dadurch gekennzeichnet, dass**
im Rahmen des Dialogs mit dem Sprachdialogsystem eine automatische Ausgabe von Informationen, Sprachinformationen, Videoinformationen oder beides vorgenommen wird.

7. Vorrichtung für eine aufwandsreduzierte Bearbeitung von Signalisierungsinformationen im Rahmen eines Dialogs mit einem Sprachdialogsystem in einem Paketnetz mit
- einem Sprachdialogsystem (IVR1), welches frei von Hardwareeinrichtungen zur Unterstützung von In-Band-Signalisierung ist,
- einem Sprachdialogsystem (IVR2) mit spezieller Hardwareeinrichtung zur Unterstützung von In-Band-Signalisierung, und
- einer Steuervorrichtung (CS2) mit Mitteln zur Durchführung eines Verfahrens gemëß Auspruch 1 oder 2.

8. Steuervorrichtung (CS2) nach Anspruch 7,
**dadurch gekennzeichnet, dass**
die Steuervorrichtung durch eine paketbasierte Vermittlungsstelle, einen Call Server, einen Proxy Server oder einen Softswitch gegeben ist.

## Claims

1. Method for stipulating the type of transmission of signalling information between a first and a second packet network terminal point for reduced-complexity handling of the signalling information as part of a dialogue with a voice dialogue system in a packet network (IPNet), which method involves
- a voice dialogue system (IVR1) which is free of specific hardware devices for supporting in-band signalling being determined as one of the packet network terminal points,
- voice codecs with in-band signalling being largely avoided for the transmission of signalling information, in that
- if, as part of codec negotiation between the two packet network terminal points, a voice codec with out-of-band signalling or signalling based on RFC 2833 which voice codec is supported by both packet network terminal points can be stipulated for the transmission by the packet network (IPNet) then a voice codec with out-of-band signalling or signalling based on RFC 2833 which voice codec is supported by both packet network terminal points is stipulated for the transmission of signalling information, and
- if, as part of codec negotiation between the two packet network terminal points, no voice codec with out-of-band signalling or signalling based on RFC 2833 which voice codec is supported by both packet network terminal points can be stipulated for the transmission by the packet network (IPNet) then
-- a voice dialogue system (IVR2) which supports in-band signalling is determined as the one of the packet network terminal points instead of the voice dialogue system (IVR1) without a specific hardware device for supporting in-band signalling,
-- automatic rerouting or forwarding of a service request to the voice dialogue system (IVR2) which supports in-band signalling is performed, and
-- a coding method with in-band signalling is stipulated for the transmission of the signalling information.

2. Method for stipulating the type of transmission of signalling information between a first and a second packet network terminal point for reduced-complexity handling of the signalling information as part of a dialogue with a voice dialogue system in a packet network (IPNet), which method involves
- a voice dialogue system (IVR1) without a specific hardware device for supporting in-band signalling being determined as the second packet network terminal point,
- as part of codec negotiation between the two packet network terminal points, a voice codec that is supported by both packet network terminal points being stipulated for the transmission of signalling information, and
- the voice dialogue system (IVR1) being controlled by a control apparatus (CS2) which control apparatus, regardless of the selected voice codec, sends a signalling message to the first packet network terminal point, which signalling message prescribes the use of out-of-band signalling,
- if the first packet network terminal point does not permit out-of-band signalling for voice codecs which are supported by both packet network terminal points then
-- a voice dialogue system (IVR2) which supports in-band signalling is determined as a packet network terminal point instead of the voice dialogue system (IVR1) without a specific hardware device for supporting in-band signalling,
-- automatic rerouting or forwarding of a service request to the voice dialogue system (IVR2) which supports in-band signalling is performed, and
-- a coding method with in-band signalling is stipulated for the transmission of the signalling information.

3. Method according to either of the preceding claims,
**characterized in that**
a voice codec which is supported by both packet network terminal points is selected as part of codec negotiation/determination.

4. Method according to one of the preceding claims,
**characterized in that**
the transmission of signalling information is effected as part of the automated information output by means of DTMF (Dual Tone Multiple Frequency) characters.

5. Method according to one of the preceding claims,
**characterized in that**
the voice dialogue system (IVR1) is controlled by a control apparatus (CS2) which is provided by a packet-based switching centre, a call server, a proxy server or a softswitch.

6. Method according to one of the preceding claims,
**characterized in that**
automatic output of information, voice information or video information or both, is performed as part of the dialogue with the voice dialogue system.

7. Apparatus for reduced-complexity handling of signalling information as part of a dialogue with a voice dialogue system in a packet network having
- a voice dialogue system (IVR1) which is free of hardware devices for supporting in-band signalling,
- a voice dialogue system (IVR2) with a specific hardware device for supporting in-band signalling, and
- a control apparatus (CS2) with means for performing a method according to Claim 1 or 2.

8. Control apparatus (CS2) according to Claim 7,
**characterized in that**
the control apparatus is provided by a packet-based switching centre, a call server, a proxy server or a softswitch.

## Revendications

1. Procédé pour déterminer le type de la transmission d'informations de signalisation entre un premier et un deuxième point final d'un réseau de paquets pour un traitement à complexité réduite des informations de signalisation dans le cadre d'un dialogue avec un système de dialogue vocal dans un réseau de paquets (IPNet), selon lequel :
- un système de dialogue vocal (IVR1) exempt d'équipements hardware spéciaux pour supporter la signalisation en bande est défini comme étant l'un des points finaux du réseau de paquets,
- les codecs vocaux avec signalisation en bande sont largement évités pour la transmission d'informations de signalisation,
**caractérisé en ce que** :
- si, dans le cadre d'une négociation de codec entre les deux points finaux du réseau de paquets, un codec vocal avec signalisation hors bande ou signalisation RFC 2833 supporté par les deux points finaux du réseau de paquets peut être déterminé pour la transmission sur le réseau de paquets (IPNet), on détermine un codec vocal avec signalisation hors bande ou signalisation RFC 2833 supporté par les deux points finaux du réseau de paquets pour la transmission d'informations de signalisation et
- si, dans le cadre d'une négociation de codec entre les deux points finaux du réseau de paquets, aucun codec vocal avec signalisation hors bande ou signalisation RFC 2833 supporté par les deux points finaux du réseau de paquets ne peut être déterminé pour la transmission sur le réseau de paquets (IPNet),
-- un système de dialogue vocal (IVR2) supportant la signalisation en bande est défini comme étant l'un des points finaux du réseau de paquets au lieu du système de dialogue vocal (IVR1) sans équipement hardware spécial pour supporter la signalisation en bande,
-- un reroutage automatique resp. une retransmission automatique d'une requête de service au système de dialogue vocal (IVR2) supportant la signalisation en bande est effectué et
-- on détermine un procédé de codage avec signalisation en bande pour la transmission des informations de signalisation.

2. Procédé pour déterminer le type de la transmission d'informations de signalisation entre un premier et un deuxième point final d'un réseau de paquets pour un traitement à complexité réduite des informations de signalisation dans le cadre d'un dialogue avec un système de dialogue vocal dans un réseau de paquets (IPNet), selon lequel :
- un système de dialogue vocal (IVR1) sans équipement hardware spécial pour supporter la signalisation en bande est défini comme étant le deuxième point final du réseau de paquets,
- dans le cadre d'une négociation de codec entre les deux points finaux du réseau de paquets, on détermine un codec vocal supporté par les deux points finaux du réseau de paquets pour la transmission d'informations de signalisation et
- le système de dialogue vocal (IVR1) est commandé par un dispositif de commande (CS2) qui envoie au premier point final du réseau de paquets, indépendamment du codec vocal sélectionné, un message de signalisation qui prescrit l'utilisation de la signalisation hors bande,
- si le premier point final du réseau de paquets ne permet pas la signalisation hors bande pour des codecs vocaux supportés par les deux points finaux du réseau de paquets,
-- un système de dialogue vocal (IVR2) supportant la signalisation en bande est défini comme étant un point final du réseau de paquets au lieu du système de dialogue vocal (IVR1) sans équipement hardware spécial pour supporter la signalisation en bande,
-- un reroutage automatique resp. une retransmission automatique d'une requête de service au système de dialogue vocal (IVR2) supportant la signalisation en bande est effectué et
-- on détermine un procédé de codage avec signalisation en bande pour la transmission des informations de signalisation.

3. Procédé selon l'une des revendications précédentes, **caractérisé en ce qu'**est effectuée, dans le cadre d'une négociation / détermination de codec, une sélection d'un codec vocal qui est supporté par les deux points finaux du réseau de paquets.

4. Procédé selon l'une des revendications précédentes, **caractérisé en ce que** la transmission d'informations de signalisation se fait dans le cadre de l'émission automatisée d'informations au moyen de signaux DTMF (Dual Tone Multiple Frequency).

5. Procédé selon l'une des revendications précédentes, **caractérisé en ce que** le système de dialogue vocal (IVR1) est commandé par un dispositif de commande (CS2) qui est fourni par un centre de commutation basé paquets, un serveur d'appels, un serveur proxy ou un commutateur logiciel.

6. Procédé selon l'une des revendications précédentes, **caractérisé en ce qu'**est effectuée, dans le cadre du dialogue avec le système de dialogue vocal, une émission automatique d'informations, d'informations vocales, d'informations vidéo ou les deux.

7. Dispositif pour un traitement à complexité réduite d'informations de signalisation dans le cadre d'un dialogue avec un système de dialogue vocal dans un réseau de paquets avec :
- un système de dialogue vocal (IVR1) qui est exempt d'équipements hardware pour supporter la signalisation en bande,
- un système de dialogue vocal (IVR2) avec un équipement hardware spécial pour supporter la signalisation en bande et
- un dispositif de commande (CS2) avec des moyens pour exécuter un procédé selon la revendication 1 ou 2.

8. Dispositif de commande (CS2) selon la revendication 7, **caractérisé en ce que** le dispositif de commande est fourni par un centre de commutation basé paquets, un serveur d'appels, un serveur proxy ou un commutateur logiciel.
